# EUROPEAN PATENT APPLICATION

(11) **EP 2 472 969 A1**
(43) Date of publication of application: **04.07.2012**
(21) Application number: 10811987.6
(22) Date of filing: 27.08.2010
(51) Int. Cl.: H04W 64/00, G01S 5/14

(54) **WIRELESS BASE STATION, MOBILE STATION AND MEASUREMENT METHOD**

(30) Priority: 27.08.2009 JP 2009197465
(71) Applicant: NTT DoCoMo, Inc., Tokyo 100-6150 (JP)
(72) Inventor: ISHII, Minami, Tokyo 100-6150 (JP); ABETA, Sadayuki, Tokyo 100-6150 (JP); OKUBO, Naoto, Tokyo 100-6150 (JP); IWAMURA, Mikio, Tokyo 100-6150 (JP)
(74) Representative: HOFFMANN EITLE
(86) International application number: PCT/JP2010/064561
(87) International publication number: WO 2011/024938

(57) **Abstract**

A radio base station eNB according to the present invention includes: a PRS transmission unit 12 configured to transmit PRS in subordinate cells #1 to #3; and a PDCCH signal transmission unit 10 configured to, when transmitting the PRS in the cells #1 to #3, generate and transmit a PDCCH signal by using PRS-RNTI.

## Description

### TECHNICAL FIELD

The present invention relates to a radio base station, a mobile station, and a measurement method.

### BACKGROUND ART

In a standards determination work of an LTE (Long Term Evolution)-Rel.9 scheme, the introduction of PRS (Positioning Reference Signal) has been examined, which can be transmitted with a density higher than CRS (Common Reference Signal) in order for a mobile station UE to measure a propagation delay difference among a plurality of cells in LCS (Location Service).

### SUMMARY OF THE INVENTION

### PROBLEMS TO BE SOLVED BY THE INVENTION

However, a mobile communication system of the LTE-Rel. 9 scheme has a problem in that since a PDSCH signal (downlink data signal) may not be transmitted with resource blocks of a subframe in which the PRS is transmitted, when a radio base station eNB transmits the PRS every time, a cell throughput in a downlink may be reduced.

Therefore, the present invention has been achieved in view of the above-described problems, and an object thereof is to provide a radio base station, a mobile station, and a measurement method, by which it is possible to transmit PRS while minimizing the reduction in a cell throughput in a downlink.

### MEANS FOR SOLVING THE PROBLEM

A first characteristic of the present invention is summarized as a radio base station comprising, a reference signal transmission unit configured to transmit a reference signal for measuring a propagation delay difference in a mobile station in a subordinate cell and a downlink control channel signal transmission unit configured to, when the reference signal is transmitted in the subordinate cell, generate and transmit a downlink control channel signal using a designated identifier.

A second characteristic of the present invention is summarized as a mobile station comprising, a reference signal reception unit configured to receive a reference signal for measuring a propagation delay difference in the mobile station in a cell, and a downlink control channel signal reception unit configured to receive a downlink control channel signal generated using a designated identifier in a serving cell , in which when the downlink control channel signal reception unit receives the downlink control channel signal in the serving cell , the reference signal reception unit is configured to determine that the reference signal has been transmitted.

A third characteristic of the present invention is summarized as a measurement method, in which a mobile station measures a propagation delay difference between a serving cell and a plurality of cells based on reference signals received from the plurality of cells, comprising, a step in which when transmitting the reference signal in the plurality of cells, the radio base station generates and transmits a downlink control channel signal using a designated identifier and, a step in which when the downlink control channel signal generated using the designated identifier is received in the serving cell , the mobile station receives the reference signal, a step in which the mobile station measures the propagation delay difference between the serving cell and the plurality of cells based on a reference signal received from the plurality of cells, and a step in which the mobile station transmits the measured propagation delay difference to the radio base station.

### EFFECT OF THE INVENTION

As described above, according to the present invention, it is possible to provide a radio base station, a mobile station, and a measurement method, by which it is possible to transmit PRS while minimizing the reduction in a cell throughput in a downlink.

### BRIEF DESCRIPTION OF THE DRAWINGS

[Fig. 1] Fig. 1 is an entire configuration diagram of a mobile communication system according to a first embodiment of the present invention.
[Fig. 2] Fig. 2 is a functional block diagram of a radio base station according to the first embodiment of the present invention.
[Fig. 3] Fig. 3 is a diagram illustrating an example of the format of a PDCCH signal transmitted by the radio base station according to the first embodiment of the present invention.
[Fig. 4] Fig. 4 is a diagram illustrating an example of the format of a PDCCH signal transmitted by the radio base station according to the first embodiment of the present invention.
[Fig. 5] Fig. 5 is a diagram illustrating an example of PRS transmitted by the radio base station according to the first embodiment of the present invention.
[Fig. 6] Fig. 6 is a functional block diagram of a mobile station according to the first embodiment of the present invention.
[Fig. 7] Fig. 7 is a flowchart illustrating the operation of the mobile station according to the first embodiment of the present invention.
[Fig. 8] Fig. 8 is a sequence diagram illustrating the operation of the mobile communication system according to the first embodiment of the present invention.

### BEST MODES FOR CARRYING OUT THE INVENTION

### (Configuration of mobile communication system according to first embodiment of the present invention)

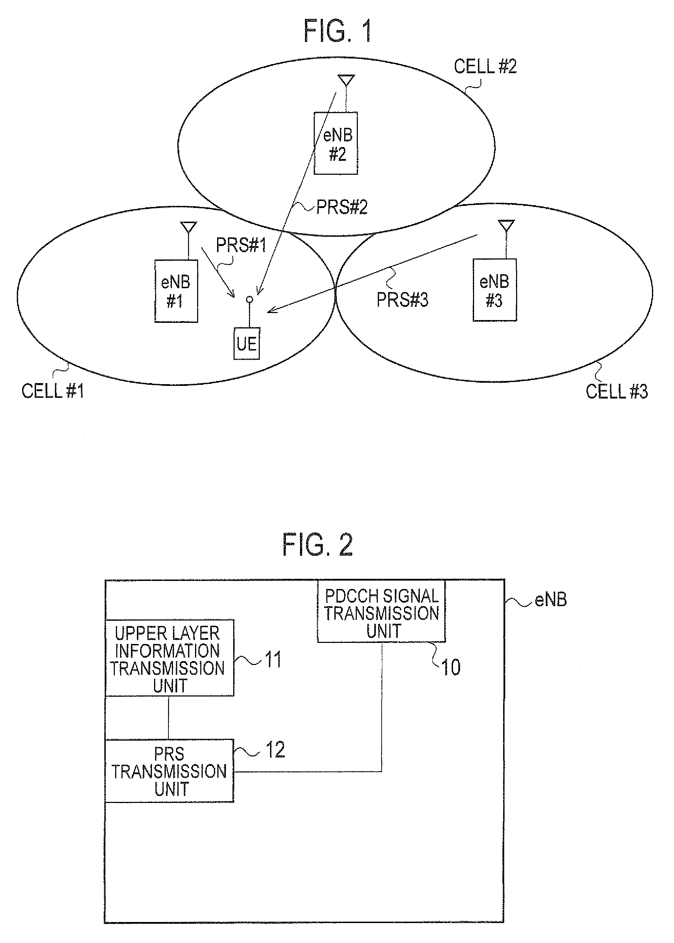

With reference to Fig. 1 to Fig. 6, the configuration of a mobile communication system according to a first embodiment of the present invention will be described.

The mobile communication system according to the present embodiment is a mobile communication system of the LTE-Rel.9 scheme. As illustrated in Fig. 1, in the mobile communication system according to the present embodiment, a mobile station UE is configured to receive PRSs #1 to #3 from a plurality of cells #1 to #3, respectively.

Furthermore, the mobile communication system according to the present embodiment is configured to use an "OTDOA (Observed Time Difference Of Arrival) scheme" as a positioning scheme when LCS is provided.

According to the OTDOA scheme, the configuration is such that the mobile station UE measures a propagation delay difference among a plurality of cells designated by radio base stations eNB and reports a measurement result to a radio base station eNB #1, the radio base station eNB #1 transfers the report to E-SMLC (Evolved Serving Mobile Location Center), which is an upper node of radio base stations eNB #1 to eNB #3, and the E-SMLC calculates location information of the mobile station UE based on the propagation delay difference.

In the OTDOA scheme, it is possible to calculate the location information of the mobile station UE based on a propagation delay difference among three or more cells.

In the mobile communication system according to the present embodiment, as described above, since the propagation delay difference measured from a plurality of cells is used, it is preferable that synchronization is achieved among the cells. However, the synchronization may not be achieved among the cells.

In addition, in the present embodiment, a case will be described, in which the mobile station UE completes a connection to cell #1 and visits a cell #1 and the radio base station eNB #1 allows the mobile station UE to measure the propagation delay difference between cells #1 and #2 and the propagation delay difference between cells #1 and #3 and to report the propagation delay differences to the radio base station eNB.

In addition, the cells #1 to #3 may be managed by the same radio base station eNB, or may be managed by the plurality of radio base stations eNB #1 to eNB #3 as illustrated in Fig. 1. Hereinafter, the present embodiment will be described on the assumption that the cells #1 to #3 are managed by the same radio base station eNB.

As illustrated in Fig. 2, the radio base station eNB includes a PDCCH signal transmission unit 10, an upper-layer information transmission unit 11, and a PRS transmission unit 12.

The PDCCH signal transmission unit 10 is configured to generate and transmit a PDCCH (Physical Downlink Control Channel) signal.

For example, the PDCCH signal transmission unit 10 is configured to generate and transmit a downlink control signal addressed to each mobile station UE as the PDCCH signal, by using C-RNTI (Cell-Radio Network Temporary Identity) assigned to each mobile station UE in the cells #1 to #3.

Specifically, the PDCCH signal transmission unit 10 is configured to generate the downlink control signal addressed to each mobile station UE by adding CRC (Cyclic Redundancy Check) bits in which the C-RNTI assigned to each mobile station UE has been masked.

For example, the downlink control signal addressed to each mobile station UE includes "DL scheduling information", "UL scheduling grant" and the like.

Furthermore, the PDCCH signal transmission unit 10 is configured to generate and transmit the PDCCH signal by using P-RNTI (Paging-Radio Network Temporary Identity).

Specifically, the PDCCH signal transmission unit 10 is configured to generate the above-described PDCCH signal by adding CRC bits in which the P-RNTI has been masked.

In this way, the PDCCH signal transmission unit 10 transmits the PDCCH signal generated using the P-RNTI, thereby notifying the transmission of a paging signal in the same subframe as a subframe in which the PDCCH signal is transmitted.

Furthermore, the PDCCH signal transmission unit 10 is configured to generate and transmit the PDCCH signal by using SI-RNTI (System Information-Radio Network Temporary Identity).

Specifically, the PDCCH signal transmission unit 10 is configured to generate the above-described PDCCH signal by adding CRC bits in which the SI-RNTI has been masked.

In this way, the PDCCH signal transmission unit 10 transmits the PDCCH signal generated using the SI-RNTI, thereby notifying the transmission of broadcast information (SI) in the same subframe as a subframe in which the PDCCH signal is transmitted.

Furthermore, the PDCCH signal transmission unit 10 is configured to generate and transmit the PDCCH signal by using PRS-RNTI.

Specifically, the PDCCH signal transmission unit 10 is configured to generate the above-described PDCCH signal by adding CRC bits in which the PRS-RNTI has been masked.

Here, "FFF4" to "FFFD" and the like, which are reserved in TS 36.321 of 3GPP specifications, may be used as the PRS-RNTI.

In this way, the PDCCH signal transmission unit 10 transmits the PDCCH signal generated using the PRS-RNTI, thereby notifying the transmission of the PRS in the same subframe as a subframe in which the PDCCH signal is transmitted or a subframe which is subsequent to the subframe, in which the PDCCH signal is transmitted, by a predetermined number.

In addition, the PDCCH signal transmission unit 10 may transmit the PDCCH signal generated using the PRS-RNTI, thereby notifying the non-transmission of the PRS in the same subframe as a subframe in which the PDCCH signal is transmitted or a subframe which is subsequent to the subframe, in which the PDCCH signal is transmitted, by a predetermined number.

Otherwise, the PDCCH signal transmission unit 10 transmits the PDCCH signal generated using the PRS-RNTI, thereby instructing a report of the propagation delay difference among the cells in the same subframe as a subframe in which the PDCCH signal is transmitted or a subframe which is subsequent to the subframe, in which the PDCCH signal is transmitted, by a predetermined number.

Furthermore, the PDCCH signal transmission unit 10 transmits the PDCCH signal generated using the PRS-RNTI, thereby instructing a non-report of the propagation delay difference among the cells in the same subframe as a subframe in which the PDCCH signal is transmitted or a subframe which is subsequent to the subframe, in which the PDCCH signal is transmitted, by a predetermined number.

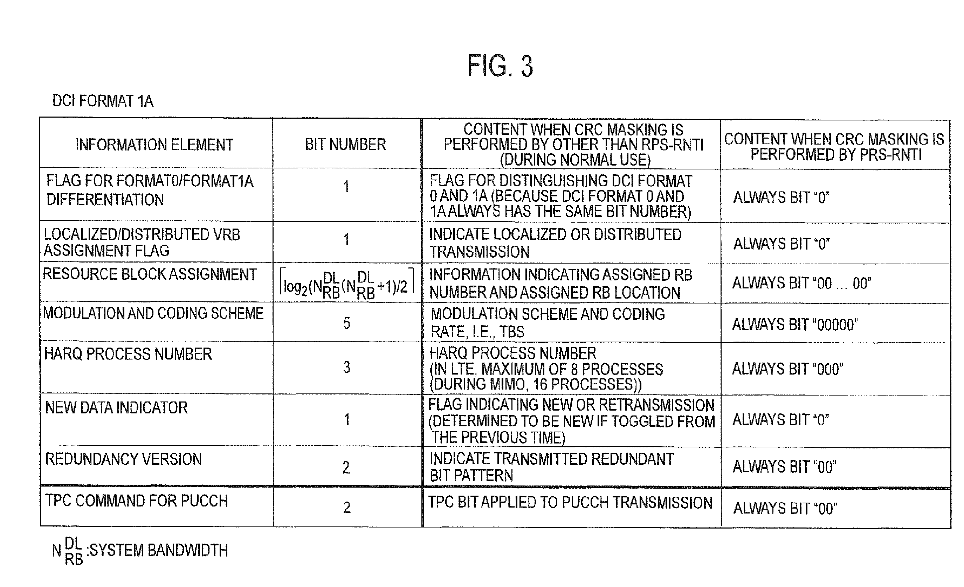

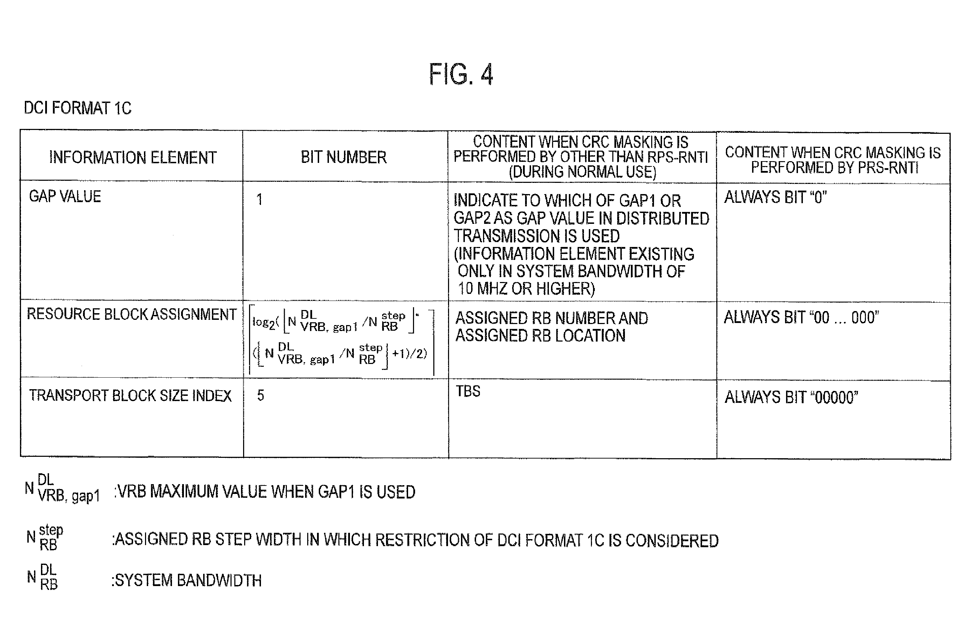

Furthermore, as a DCI format of the PDCCH signal generated using the PRS-RNTI, a "DCI format 1A" illustrated in Fig. 3 may be used or a "DCI format 1C" illustrated in Fig. 4 may also be used.

Here, the PDCCH signal transmission unit 10 may transmit "0" or "1" at all bits in the "DCI format 1A" or the "DCI format 1C" used as the DCI format of the PDCCH signal generated using the PRS-RNTI.

By defining all the bits in the "DCI format 1A" or the "DCI format 1C", it is possible to prevent the transmission of the PRS from being missed or prevent a PRS detection process from being erroneously performed even though it is determined that the PRS does not exist.

The upper-layer information transmission unit 11 is configured to transmit PCI (Physical Cell ID) assigned to the subordinate cells #1 to #3, a PRS transmission timing in the cells #1 to #3, resource blocks (a frequency bandwidth) for performing the transmission of the PRS, and the like to the mobile station UE by using an RRC message including broadcast information, individual signaling of the mobile station UE and the like.

Furthermore, the upper-layer information transmission unit 11 may be configured to designate a cell to which a propagation delay difference is to be transmitted, that is, a cell in which the PRS is received, with respect to the mobile station UE.

The PRS transmission unit 12 may be configured to transmit the PRS in the same subframe as a subframe in which the PDCCH signal generated using the PRS-RNTI is transmitted.

Otherwise, the PRS transmission unit 12 may be configured to transmit the PRS in a subframe which is transmitted later by a predetermined number (for example, N) as compared with the subframe in which the PDCCH signal generated using the PRS-RNTI is transmitted.

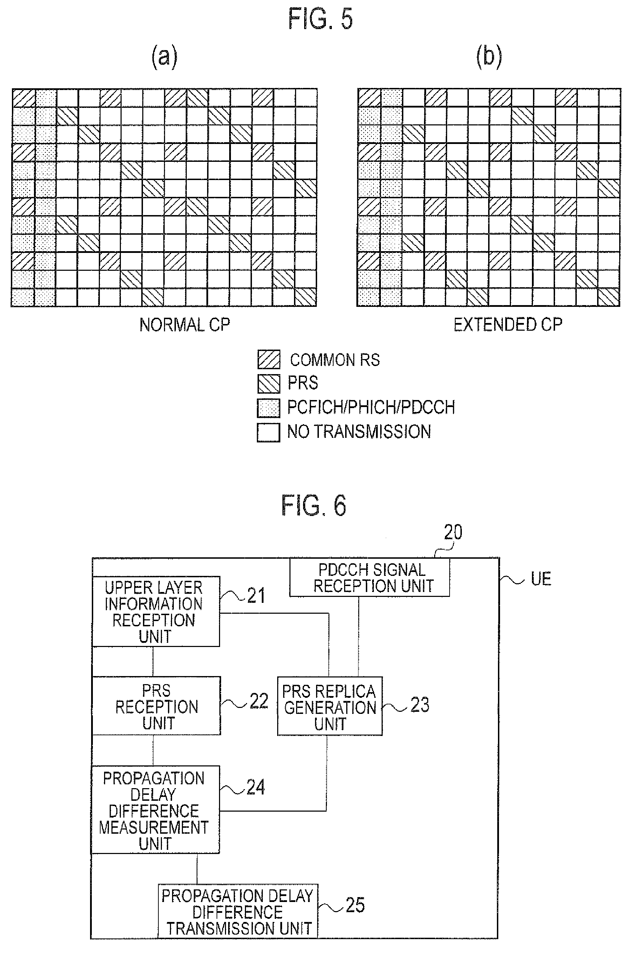

For example, as illustrated in Fig. 5(a) and Fig. 5(b), the PRS transmission unit 12 may be configured to map the sequence of the PRS to each resource element of each resource block.

Fig. 5(a) illustrates an example of a PRS transmission pattern when "Normal CP" is used, and Fig. 5(b) illustrates an example of a PRS transmission pattern when "Extended CP" is used.

In addition, at the resource blocks to which the PRS is transmitted by the PRS transmission unit 12, a PDSCH (Physical Downlink Shanred Channel) signal (a downlink data signal) may be configured not to be transmitted. As a consequence, it is possible to improve accuracy for detecting the timing of the PRS.

As illustrated in Fig. 6, the mobile station UE includes a PDCCH signal reception unit 20, an upper-layer information reception unit 21, a PRS reception unit 22, a PRS replica generation unit 23, a propagation delay difference measurement unit 24, and a propagation delay difference transmission unit 25.

The PDCCH signal reception unit 20 is configured to receive the PDCCH signal transmitted by the radio base station eNB.

Here, the PDCCH signal reception unit 20 is configured to monitor the presence or absence of the PDCCH signal generated using the C-RNTI assigned to the mobile station UE, the PDCCH signal generated using the P-RNTI, the PDCCH signal generated using the SI-RNTI, or the PDCCH signal generated using the PRS-RNTI. When the PDCCH signal exists, the PDCCH signal reception unit 20 is configured to continue a reception process of the PDCCH signal.

For example, when there exists the PDCCH signal generated using the C-RNTI assignable to the mobile station UE, the PDCCH signal reception unit 20 is configured to receive the PDCCH signal as a downlink control signal addressed to the mobile station UE.

When there exists the PDCCH signal generated using the P-RNTI, the PDCCH signal reception unit 20 is configured to recognize that a paging signal is transmitted in the same subframe as the subframe in which the PDCCH signal is transmitted.

Furthermore, when there exists the PDCCH signal generated using the SI-RNTI, the PDCCH signal reception unit 20 is configured to recognize that the broadcast information (SI) is transmitted, in the same subframe as the subframe in which the PDCCH signal is transmitted.

When there exists the PDCCH signal generated using the PRS-RNTI, the PDCCH signal reception unit 20 is configured to recognize that the PRS is transmitted (or the PRS is not transmitted) in the same subframe as the subframe in which the PDCCH signal is transmitted or the subframe which is subsequent to the subframe, in which the PDCCH signal is transmitted, by a predetermined number.

On the contrary, when there exists no PDCCH signal generated using the PRS-RNTI, the PDCCH signal reception unit 20 may be configured to recognize that the PRS is not transmitted (or the PRS is transmitted) in the same subframe as the subframe in which the PDCCH signal is transmitted or the subframe which is subsequent to the subframe, in which the PDCCH signal is transmitted, by the predetermined number.

The upper-layer information reception unit 21 is configured to receive the PCI assigned to the cells #1 to #3, the PRS transmission timing in the cells #1 to #3, the resource blocks (the frequency bandwidth) for performing the transmission of the PRS, and the like from the radio mobile station eNB through the RRC message including the broadcast information, the individual signaling to the mobile station UE and the like.

Furthermore, the upper-layer information reception unit 21 may be configured to receive information for designating a cell from which a propagation delay difference is measured, that is, for designating a cell in which the PRS is received, from the radio base station eNB.

The PRS reception unit 22 is configured to receive the PRS in the cells #1 to #3. Specifically, when the PDCCH signal generated using the PRS-RNTI is received in the cells #1 to #3, the PRS reception unit 22 is configured to receive the PRS in the cells #1 to #3 in the same subframe as the subframe in which the PDCCH signal is transmitted or the subframe which is subsequent to the subframe, in which the PDCCH signal is transmitted, by the predetermined number.

The PRS replica generation unit 23 is configured to generate a PRS replica in the cells #1 to #3 using the received PCI.

The propagation delay information measurement unit 24 is configured to detect the PRS in the cells #1 to #3 based on the PRS received in the PRS reception unit 22 and the PRS replica in the cells #1 to #3, which has been generated by the PRS replica generation unit 23, and calculate the propagation delay difference between the cells #1 and #2 and the propagation delay difference between the cells #1 and #3.

In addition, the propagation delay information measurement unit 24 may be configured to measure a propagation delay difference between the PRS of the cell detected with high accuracy and a PRS #1 in the cell #1 by using both the PRS from the cell designated by the radio base station eNB and PRSs from other cells.

Furthermore, the propagation delay information measurement unit 24 is configured to transmit the measured propagation delay difference and the PCI of the cells, for which the propagation delay difference has been measured, to the radio base station eNB.

In addition, the propagation delay information measurement unit 24, the propagation delay transmission unit 24 may be configured to transmit a propagation delay difference satisfying a predetermined condition in cells other than the cells #1 to #3 designated by the radio base station eNB.

### (Operation of mobile communication system according to first embodiment of the present invention)

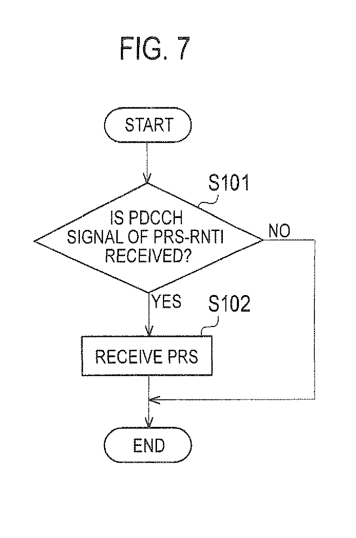

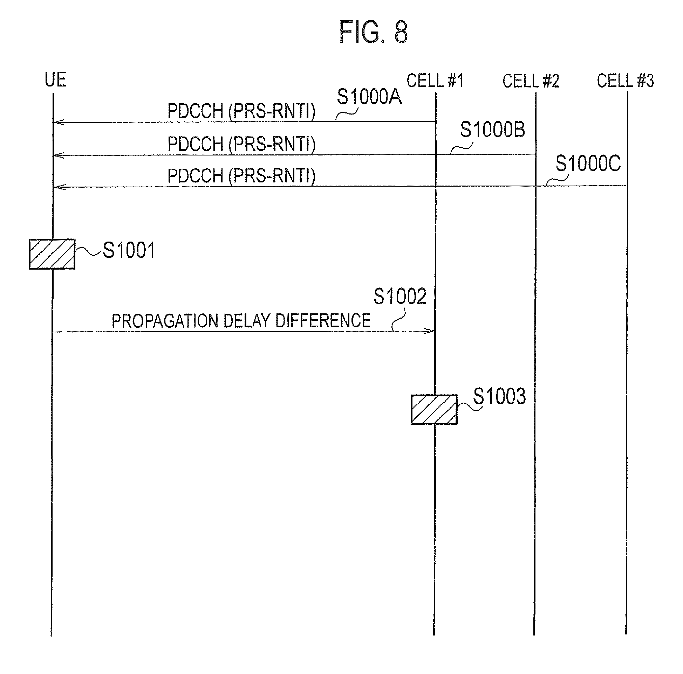

With reference to Fig. 7 and Fig. 8, the operation of the mobile communication system according to the first embodiment of the present invention will be described.

Firstly, as illustrated in Fig. 7, only when the mobile station UE receives the PDCCH signal generated using the PRS-RNTI in a cell where the mobile station UE visits or a cell with which the mobile station UE communicates in step S101, the mobile station UE determines that the PRS has been transmitted in the cell and a neighbouring cell and attempts to receive the PRS in step S102.

Secondly, as illustrated in Fig. 8, the radio base station eNB transmits the PDCCH signal generated using the PRS-RNTI in the cell #1 in step S1000A, transmits the PDCCH signal generated using the PRS-RNTI in the cell #2 in step S1000B, and transmits the PDCCH signal generated using the PRS-RNTI in the cell #3 in step 51000C.

Since the mobile station UE receives the PDCCH signal generated using the PRS-RNTI and transmitted in the serving cell #1 in step S1000A, the mobile station UE receives the PRS transmitted in the cells #1 to #3 based on resource blocks, in which the PRS has been transmitted, in step S1001.

Then, the mobile station UE calculates a propagation delay difference between the cells #1 and #2 and a propagation delay difference between the cells #1 and #3 based on the PRSs received from the cells #1 to #3, and transmits the propagation delay differences to the radio base station eNB via the cell #1 which is a serving cell , in step S1002.

In step S1003, the radio base station eNB transmits the propagation delay difference between the cells #1 and #2 and the propagation delay difference between the cells #1 and #3, which have been received via the cell #1, to E-SMLC. Then, the E-SMLC calculates the location information of the mobile station UE based on the propagation delay differences.

### (Operation and effect of mobile communication system according to first embodiment of the present invention)

In accordance with the mobile communication system according to the first embodiment of the present invention, only when a mobile station UE having visited a subordinate cell needs to measure a propagation delay difference in the cell, the radio base station eNB can transmit PRS in the cell without performing signaling with the RRC, resulting in the improvement of the use efficiency of radio resources of the entire cell.

That is, in accordance with the mobile communication system according to the first embodiment of the present invention, when a mobile station UE having visited a neighbouring cell does not need to measure the propagation delay difference in the cell, the radio base station eNB does not transmit PRS in the cell, so that it is possible to transmit a PDSCH signal by using a radio resource of a subframe ensured in order to transmit the PRS, resulting in the improvement of the use efficiency of the radio resources of the entire cell.

Furthermore, in accordance with the mobile communication system according to the first embodiment of the present invention, since the radio base station eNB changes broadcast information (a kind of an upper layer signal) needed to be notified after a paging signal is transmitted to all mobile stations UEs, it is not necessary to notify whether the PRS has been transmitted, so that it is possible to prevent the complexity of a procedure and reduce the transmission and reception processes of an unnecessary signal.

Furthermore, in accordance with the mobile communication system according to the first embodiment of the present invention, since it is not necessary for the radio base station eNB to notify whether the PRS has been transmitted by an individual RRC message (a kind of an upper layer signal), it is possible to prevent the complexity of a procedure and reduce the transmission of an unnecessary signal.

That is, in accordance with the mobile communication system according to the first embodiment of the present invention, the radio base station eNB notifies whether PRS has been transmitted, by allocating a common PRS-RNTI to a plurality of mobile stations UE and transmitting the PDCCH signal generated using the PRS-RNTI, it is possible to prevent the complexity of a procedure and reduce the transmission of an unnecessary signal.

The characteristics of the present embodiment as described above may be expressed as follows.

A first characteristic of the present embodiment is summarized in that the radio base station eNB includes: a PRS transmission unit 12 (a reference signal transmission unit) configured to transmit PRS (a reference signal for measuring a propagation delay difference in the mobile station UE) in a subordinate cell; and a PDCCH signal transmission unit 10 (a downlink control channel signal transmission unit) configured to, when transmitting the PRS in the subordinate cell, generate and transmit a PDCCH signal (a downlink control channel signal) using PRS-RNTI (a designated identifier).

In the first characteristic of the present embodiment, the PDCCH signal transmission unit 10 may be configured to transmit the PDCCH signal generated using the PRS-RNTI in the same subframe as a subframe in which the PRS is transmitted by the PRS transmission unit 12.

In the first characteristic of the present embodiment, the PDCCH signal transmission unit 10 may be configured to transmit the PDCCH signal generated using the PRS-RNTI in the subframe which is transmitted earlier by a predetermined number than the subframe in which the PRS is transmitted by the PRS transmission unit 12.

A second characteristic of the present embodiment is summarized in that the mobile station UE includes: a PRS reception unit 22 (a reference signal reception unit) configured to receive PRS in a cell; and a PDCCH signal reception unit 20 (a downlink control channel signal reception unit) configured to receive a PDCCH signal generated using PRS-RNTI in a serving cell , wherein, when the PDCCH signal reception unit 20 receives the PDCCH signal generated using the PRS-RNTI in the cell, the PRS reception unit 22 is configured to determine that the PRS has been transmitted.

In the second characteristic of the present embodiment, the PRS reception unit 22 may be configured to receive the PRS in the same subframe as a subframe in which the PDCCH signal generated using the PRS-RNTI is received in the PDCCH signal reception unit 20.

In the second characteristic of the present embodiment, the PRS reception unit 22 may be configured to receive the PRS in a subframe which is subsequent to the subframe, in which the PDCCH signal generated using the PRS-RNTI is received in the PDCCH signal reception unit 20, by a predetermined number.

In the second characteristic of the present embodiment, the mobile station may further include: the propagation delay difference measurement unit 24 configured to measure a propagation delay difference between cells #1 and #2 and a propagation delay difference between cells #1 and #3 based on PRS #1 to PRS #3 received from a plurality of cells; and the propagation delay difference transmission unit 25 configured to transmit the propagation delay differences measured from the plurality of cells.

In the second characteristic of the present embodiment, when the PRS satisfies a predetermined condition even in PRS of a cell other than the cells #1 to #3 designated by the radio base station eNB, the propagation delay transmission unit 24 may be configured to transmit the propagation delay difference to the radio base station eNB. The predetermined condition may be a condition regarding the reception level of PRS, a reference signal common to cells, or a synchronization signal.

A third characteristic of the present embodiment is summarized in that a measurement method, in which the mobile station UE measures a propagation delay difference between cells #1 and #2 and a propagation delay difference between cells #1 and #3 based on PRS received from the plurality of cells #1 to #3, includes: a step in which when transmitting the PRS in the subordinate cells #1 to #3, the radio base station eNB generates and transmits a PDCCH signal using PRS-RNTI; a step in which when the PDCCH signal generated using the PRS-RNTI is received in a serving cell , the mobile station UE receives the PRS; a step in which the mobile station UE measures the propagation delay difference between cells #1 and #2 and the propagation delay difference between cells #1 and #3 based on a reference signal received from the cells #1 to #3; and a step in which the mobile station UE transmits the measured propagation delay differences to the radio base station eNB.

It is noted that the operation of the above-described the radio base station eNB or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station eNB or the mobile station UE. Further, such a storage medium or a processor may be arranged, as a discrete component, in the radio base station eNB or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A radio base station comprising:
a reference signal transmission unit configured to transmit a reference signal for measuring a propagation delay difference in a mobile station in a subordinate cell; and
a downlink control channel signal transmission unit configured to, when the reference signal is transmitted in the subordinate cell, generate and transmit a downlink control channel signal using a designated identifier.

2. The radio base station according to claim 1, wherein the downlink control channel signal transmission unit is configured to transmit the downlink control channel signal in a same subframe as a subframe in which the reference signal is transmitted by the reference signal transmission unit.

3. The radio base station according to claim 1, wherein the downlink control channel signal transmission unit is configured to transmit the downlink control channel signal in a subframe which is transmitted earlier by a predetermined number than a subframe in which the reference signal is transmitted by the reference signal transmission unit.

4. A mobile station comprising:
a reference signal reception unit configured to receive a reference signal for measuring a propagation delay difference in the mobile station in a cell; and
a downlink control channel signal reception unit configured to receive a downlink control channel signal generated using a designated identifier in a serving cell , wherein
when the downlink control channel signal reception unit receives the downlink control channel signal in the serving cell , the reference signal reception unit is configured to determine that the reference signal has been transmitted.

5. The mobile station according to claim 4, wherein the reference signal reception unit is configured to receive the reference signal in a same subframe as a subframe in which the downlink control channel signal is received in the downlink control channel signal reception unit.

6. The mobile station according to claim 4, wherein the reference signal reception unit is configured to receive the reference signal in a subframe which is subsequent to a subframe, in which the downlink control channel signal is received in the downlink control channel signal reception unit, by a predetermined number.

7. The mobile station according to claim 4, comprising:
a propagation delay difference measurement unit configured to measure a propagation delay difference between the serving cell and a plurality of cells based on reference signals received from the plurality of cells; and
a propagation delay difference transmission unit configured to transmit the propagation delay differences measured from the plurality of cells.

8. The mobile station according to claim 4, wherein when a reference signal satisfying a predetermined condition is received even in a cell other than a cell designated by a radio base station, the propagation delay transmission unit is configured to transmit a propagation delay difference between the reference signal and a reference signal of the serving cell.

9. A measurement method, in which a mobile station measures a propagation delay difference between a serving cell and a plurality of cells based on reference signals received from the plurality of cells, comprising:
a step in which when transmitting the reference signal in the plurality of cells, the radio base station generates and transmits a downlink control channel signal using a designated identifier and;
a step in which when the downlink control channel signal generated using the designated identifier is received in the serving cell , the mobile station receives the reference signal;
a step in which the mobile station measures the propagation delay difference between the serving cell and the plurality of cells based on a reference signal received from the plurality of cells; and
a step in which the mobile station transmits the measured propagation delay difference to the radio base station.
